# EUROPÄISCHE PATENTANMELDUNG

(11) **EP 1 073 008 A2**
(43) Veröffentlichungstag der Anmeldung: **31.01.2001**
(21) Anmeldenummer: 00111305.9
(22) Anmeldetag: 25.05.2000
(51) Int. Cl.: G06K 19/04

(54) **Plastikkarte und Verfahren zu deren Herstellen**

(30) Priorität: 28.07.1999 DE 19935174
(71) Anmelder: Winter, Friedrich, 81375 München (DE)
(72) Erfinder: Winter, Friedrich, 81375 München (DE); Bernard, Walter, 82194 Gröbenzell (DE)
(74) Vertreter: Niederkofler, Oswald A. Dipl.-Phys.

(57) **Zusammenfassung**

Die Erfindung betrifft ein Verfahren zum Herstellen wenigstens einer kundenindividualisierten Plastikkarte (2), bei welchem wenigstens eine unbedruckte Plastikkarte (2) hergestellt wird, die wenigstens eine hergestellte und unbedruckte Plastikkarte (2) auf einem druckereinzugsfähigen Trägermaterial (1) lösbar aufgespendet wird, eine kundenindividualisierte Druckvorlage für die wenigstens eine unbedruckte Plastikkarte (2) erstellt wird, die wenigstens eine unbedruckte Plastikkarte (2) von einem handelsüblichen Drucker mit der erstellten Druckvorlage bedruckt, und die wenigstens eine bedruckte Plastikkarte (2) von dem Trägermaterial (1) gelöst wird. Die Erfindung betrifft ferner eine Plastikkarte (2), bei welcher eine oder beide Kartenseiten mit einer durch einen Tintenstrahl- und/oder einen Laserdrucker bedruckbaren Kunststoffbeschichtung beschichtet ist. Schließlich betrifft die Erfindung auch ein druckereinzugsfähiges Trägermaterial mit wenigstens einer darauf lösbar aufgespendeten, unbedruckten, von einem handelsüblichen Drucker bedruckbaren Plastikkarte (2).

## Beschreibung

Die Erfindung betrifft ein Verfahren zum Herstellen wenigstens einer kundenindivualisierten Plastikkarte, eine Plastikkarte, ein druckereinzugsfähiges Trägermaterial sowie eine Produktkombination aus einem Trägermaterial oder einer Plastikkarte und einem Computerprogrammprodukt.

Heutzutage werden vermehrt sogenannte Plastikkarten für die verschiedenartigsten Anwendungen eingesetzt. So sind beispielsweise Plastikkarten in der Anwendung als Gesundheitskarte, Clubkarte, Computerkarte, Versicherungskarte, Bank-Card, Kreditkarte, Fahrkarte, Servicekarte, Werteinheitenspeicher, Garantiepaß, Schlüsselkarte, Ausweis, Kundenkarte, etc. bekannt. Plastikkarten werden häufig aus Werbungs- und Kundenbindungszwecken beim Verkauf von Waren und Dienstleistungen als idealer Werbeträger verwendet. Durch ihre leicht erzielbaren hohen Auflagen erreichen sie umfangreiche Zielgruppen. Außerdem dienen hochwertige Plastikkarten beispielsweise dem Firmenimage des Herausgeber als Anstrich von Exklusivität.

In einem anderen Anwendungsfeld werden Plastikkarten zur Identifikation, Benutzererkennung und Ausweisfunktion verwendet. So werden beispielsweise Berechtigungen in Behörden, Firmen, Clubs und anderen Institutionen an den Besitz von bestimmten Ausweisen gebunden. Plastikkarten sind dabei äußerst handlich, strapazierfähig, optisch attraktiv und dauerhaft zu beschriften und/oder mit Bildern zu versehen.

Ein weiteres Anwendungsfeld ist die Speicherung von Daten auf Plastikkarten.

Dabei werden die Plastikkarten heutzutage folgendermaßen hergestellt: Beim Hersteller werden Folien oder Folienblätter aus dem Plastikkartenmaterial häufig mit UV-härteriden Farben bedruckt. Zusätzlich wird insbesondere bei Kreditkarten ein Papierstreifen für ein Schreibfeld (in Form eines Streifens partiell an einer Stelle auf einer Kartenseite) auf der bereits bedruckten Folie auflaminiert. Anschließend wird die Folie in Kartenform geschnitten und an den Kunden versandt. Der Versand kann beispielsweise so erfolgen, daß die Plastikkarte auf ein Bezugsschreiben aufgespendet wird, von dem sie der Kunde leicht nach Erhalt dieses Schreibens ablösen kann.

Nachteilig bei diesem bekannten Verfahren ist, daß der Kunde jeweils einen Auftrag an eine spezielle Druckerei zum Herstellen einer Plastikkarte nach seinen Layout-Vorstellungen geben muß. Aus Kostengründen ist der Auftrag vernünftigerweise mit einer hohen Auflage verbunden. Daher kann der einzelne Kunde, zum Beispiel ein Privatmann, nicht nur eine oder nur einige Plastikkarten nach seinen Vorstellungen mit der entsprechenden Information bedrucken lassen, ohne daß er auf lagenbedingte erhöhte Kosten in Kauf nimmt.

Die Erfindung hat zum Ziel, die Herstellung von Plastikkarten mit einer kundenindividualisierten Bedruckung kostengünstiger zu gestalten.

Die Erfindung löst diese Aufgabe jeweils mit den Gegenständen der Ansprüche 1, 6, 10 und 16.

Nach Anspruch 1 ist ein Verfahren zum Herstellen wenigstens einer kundenindividualisierten Plastikkarte geschaffen, bei welchem wenigstens eine unbedruckte Plastikkarte hergestellt wird, die wenigstens eine hergestellte und unbedruckte Plastikkarte auf einem druckereinzugsfähigen Trägermaterial lösbar aufgespendet wird, eine kundenindividualisierte Druckvorlage für die wenigstens eine unbedruckte Plastikkarte erstellt wird, die wenigstens eine unbedruckte Plastikkarte von einem handelsüblichen Drucker mit der erstellten Druckvorlage bedruckt wird, und die wenigstens eine bedruckte Plastikkarte von dem Trägermaterial gelöst wird. Mit diesem erfindungsgemäßen Verfahren ist es vorteilhaft erstmals möglich, bei einem Hersteller, zum Beispiel einer Druckerei, die unbedruckten Plastikkarten herzustellen und auf das Trägermaterial lösbar aufzuspenden. Das Trägermaterial mit der wenigstens einen aufgespendeten Plastikkarte kann dann mit einer geringen Auflage z.B. über den Einzelhandel an den Kunden vertrieben werden. Dieser kann beispielsweise für lediglich eine Plastikkarte eine bestimmte Druckvorlage nach seinen Vorstellungen erstellen und von seinem Drucker (zum Beispiel dem Drucker seines privaten Personalcomputers) auf die Plastikkarte drucken lassen. Nach dem Bedrucken der Plastikkarte kann er diese leicht von dem Trägermaterial lösen und hält damit eine vom Material her hochwertige Karte mit der von ihm gewünschten Information in den Händen.

Nach Anspruch 6 ist hierzu ein spezielles druckereinzugsfähiges Trägermaterial geschaffen mit wenigstens einer darauf lösbar aufgespendeten, unbedruckten, von einem handelsüblichen Drucker bedruckbaren Plastikkarte.

Unter dem Begriff "unbedruckt" wird nachfolgend verstanden, daß auf der Plastikkarte keine Information in Form von Schriftzügen, Bildern oder ähnlichem aufgebracht ist. Selbstverständlich kann die unbedruckte Plastikkarte eine bestimmte Farbe haben oder ein entsprechend neutral gehaltenes Hintergrundmuster, das dem Kunden keinerlei Beschränkungen bei seinem Entwurf der Druckvorlage auferlegt. Es können auch das Logo, der Firmennamen oder andere kleinere Werbefelder, o.ä. von dem Hersteller der unbedruckten Plastikkarten aufgedruckt werden, die jedoch von Größe und/oder Farbgestaltung so gewählt sind, daß sie bei dem anschließenden Bedrucken der Plastikkarte durch den Endnutzer (mittels eines Tintenstrahl- oder Laserdrucker) in den Hintergrund treten, die Gestaltungsfreiheit des Endnutzers also nicht weiter einschränken. Bevorzugt sind beide Kartenseiten jedoch gänzlich neutral bzw. unbedruckt.

Mit dem Begriff "handelsüblicher Drucker" ist jeder einfachere Drucker gemeint, der beispielsweise im privaten Haushalt, in Geschäftsräumen oder Firmengebäuden aufgestellt ist. Meist handelt es sich dabei um den Drucker eines Personalcomputers, wie zum Beispiel einen Laser-, einen Tintenstrahl-, einen Thermotransfer-, einen Nadel-, einen Kettendrucker usw. Nicht mehr gemeint sollen solche Druckmaschinen sein, wie sie üblicherweise in Druckereien aufgestellt sind.

Auf diese speziellen oben genannten Drucker bezieht sich auch der Begriff des "druckereinzugsfähigen Trägermaterials". Dieses Trägermaterial muß also so beschaffen und dimensioniert sein, daß es von solchen handelsüblichen Druckern eingezogen und bedruckt werden kann.

Unter dem Begriff "Plastikkarte" werden z.B. alle aus Kunststoff hergestellten Karten verstanden, die in den eingangs genannten Anwendungsfeldern benutzt werden können.

Bevorzugt wird das Trägermaterial mit aufgespendeten Plastikkarten auf eine bestimmte Blattgröße mit einer bestimmten Anzahl an Plastikkarten pro Blatt vereinzelt. Dies hat den Vorteil, daß zum Beispiel gängige Blattgrößen (DIN A4, DIN A5, etc.) über den Handel vertrieben werden können, wie zum Beispiel ein normales Druckerpapier in Einzelblattform. Die so erhaltenen Blätter können dann ohne weitere Adaption des Druckers in den Drucker eingelegt werden und über ein herkömmliches Programm zum Entwerfen der Druckvorlage bzw. des Layouts einer Plastikkarte und zum Bedrucken dieser Druckvorlage auf die Plastikkarte bedruckt werden.

Bevorzugt wird zum Herstellen der Plastikkarte eine Plastikfolie in Kartenform geschnitten. Somit lassen sich vorteilhaft die Kosten für die Herstellung der unbedruckten Plastikkarten beim Hersteller stark verringern, da zum Ausbilden der Kartenform lediglich ein Schneid- oder Stanzwerkzeug erforderlich ist, das aus einer Plastikfolie zum Beispiel in Endlosform oder in Bogenform die einzelnen Plastikkartenformen herausschneidet.

Bevorzugt wird wenigstens eine Plastikkarte als Monokarten aus Polyester hergestellt und ein Schreibfeldlack zum Herstellen einer druckfesten Druckunterlage auf die zu bedruckende Oberfläche der wenigstens einen Plastikkarte aufgebracht. Bei sogenannten Monokarten handelt es sich im Gegensatz zu den Laminaten um Plastikkarten, die aus einer einzigen Folie bestehen. Diese sind vorteilhaft sehr kostengünstig herzustellen und lassen sich wegen ihrer geringen Dicke und damit einhergehenden Biegsamkeit auch leicht von den Einzügen handelsüblicher Drucker einziehen. Plastikkarten aus Polyester sind darüber hinaus vorteilhaft heißlaserfähig und können somit von handelsüblichen Laserdruckern bedruckt werden. Jedoch haftet der Toner nicht sehr gut auf dem Polyestermaterial, so daß als eine qualitätsmäßig bereits ausreichende Möglichkeit zum Herstellen einer druckfesten Druckunterlage der Schreibfeldlack aufgebracht wird. Soll die Druckqualität der über einen Tintenstrahl- und/oder Laserdrucker zu bedruckenden Plastikkarte noch erhöht werden, so muß die Plastikkarte mit der nachstehend diskutierten Beschichtung beschichtet werden.

Nach Anspruch 10 ist eine (insbesondere unbedruckte, siehe oben) Plastikkarte geschaffen, bei welcher eine oder beide Kartenaußenseiten mit einer durch einen Tintenstrahl- und/oder einen Laserdrucker (ggf. noch durch andere handelsübliche Drucker) bedruckbaren Kunststoffbeschichtung beschichtet sind. Es ist zwar aus dem Stand der Technik bekannt, auf solchen Plastikkarten einen Unterschriftenfeldstreifen über eine Siebdruckfarbe partiell auf einer Kartenseite auf zudrucken (siehe oben). Diese Unterschriftenfeldstreifen eignen sich jedoch nicht für das dauerhafte und qualitätsmäßig hochwertige Aufdrucken von Tinte bzw. Tonermaterial mittels eines Tintenstrahldruckers und/oder eines Laserdruckers. Zudem handelt es sich bei dem Aufbringen dieser Siebdruckfarben um ein Druck- und kein Beschichtungsverfahren im eigentlichen Sinne. Auch können solche Siebdruckfelder nicht als Kunststoffbeschichtungen bezeichnet werden. Bevorzugt umfaßt die Kunststoffbeschichtung also keine Lacke im eigentlichen Sinne (Harzlacke mit Kunstharzen (Phenol-, Amin-, Alkyd-, Epoxid-, Polyurethan-, Polyester-, mit Kolophonium modifizierte Phenyl-, Keteon-, oder Acrylatharze, Polyvinylacetat, Chlorkautschuk, chloriertes Polyprophylen, Cyklokautschuk, etc.) als Bindemittel und entsprechenden Lösungsmitteln sowie Härtern (Chlorwasserstoff, Peroxide, polyfunktionelle Verbindungen, Polyamine, Polyepoxide, Polyisocyanate), einkomponentige Lacke (Nanolack), etc.).

Es sind jedoch aus dem Stand der Technik Beschichtungen bekannt, mit denen beispielsweise Papier, Overheadfolien, etc. beschichtet werden, welche die Tinten- bzw. Tonerhafteigenschaften des Printmediums verbessern. Diese Beschichtungen werden beispielsweise auf eine entsprechende Folie aufgespritzt, getrocknet (UV-Aushärtung, etc.) und verleihen dieser Folie die gewünschte Eigenschaft. Solche Kunststoffbeschichtungen werden beispielsweise von der Firma Regulus GmbH, Erlangen, Deutschland unter der Bezeichnung SIGNOLIT™, SIV (im Jahre 2000), etc. auf Folien aufgetragen. Ähnliche Kunststoffbeschichtungen sind beispielsweise in den US-Druckschriften US-5,989,687 und US-5,880,196 beschrieben. Die in diesen Druckschriften beschriebenen Zusammensetzungen der Kunststoffbeschichtungen werden in die Offenbarung der vorliegenden Anmeldung vollinhaltlich aufgenommen, insbesondere wird auf die dortigen Ansprüche und die zugehörige Beschreibung bezüglich der Beschichtung ("coating") verwiesen. Es hat sich nunmehr gezeigt, daß diese Kunststoffbeschichtungen auch auf dem Plastikkartenkörper dauerhaft haften und somit die Tinten- bzw. Tonerhafteigenschaften auch auf Plastikkarten verbessern können.

Diese so beschichtete Plastikkarte kann nunmehr auch über Spezialeinzüge in Tintenstrahl- und/oder Laserdrucker ohne das oben erwähnte Trägermaterial eingezogen werden. Derartige Tintenstrahl- bzw. Laserdrucker mit diesen Spezialeinzügen sind kürzlich auf den Markt gekommen. Zusätzlich werden bereits für diese Drucker Plastikkarten angeboten, bei denen ein Tintenstrahldruckerpapier auf dem Plastikkartenkörper aufgeklebt ist. Dieses Tintenstrahldruckerpapier zeigt zwar auch zufriedenstellende Tinten- bzw. Tonerhafteigenschaften, aufgrund der Verklebung mit dem Plastikkartenkörper jedoch keine dauerhafte Hafteigenschaft auf dem Plastikkartenkörper. So löst sich dieses Tintenstrahidruckerpapier schon nach kurzer Benutzungsdauer an den Stoßkanten von der Plastikkarte ab, was den hohen Qualitätsansprüchen vieler verschiedener Plastikkarten nicht gerecht wird. Mit der erfindungsgemäßen Kunststoffbeschichtung konnten diese Hafteigenschaften signifikant verbessert werden; ein Ablösen dieser Kunststoffbeschichtung von dem Plastikkartenkörper ist damit nicht mehr möglich, allenfalls ein Abrieb dieser Kunststoffbeschichtung, was jedoch auch nach dauerhafter Kartenbenutzung nicht festgestellt werden konnte.

Bevorzugt bedeckt die Kunststoffbeschichtung die wenigstens eine Kartenseite vollständig. Damit hat der Privatnutzer dieser Karte vollständige Gestaltungsfreiheit über die gesamte Kartenseite. Ggf. kann ein Magnetstreifen auf einer Kartenseite vorgesehen werden (für Chipkarten, kontaktlose Karten, etc.), der bevorzugt nicht mit der Kunststoffbeschichtung beschichtet ist.

Bevorzugt ist der Plastikkartengrundkörper unbedruckt, d.h. die beiden Kartenseite mit der Beschichtung auf einer oder beiden Seiten erscheinen in einer neutralen Farbe (bevorzugt weiß), damit der Endnutzer die Kartenseite(n) vollständig nach Belieben gestalten kann.

Bevorzugt enthält die Kunststoffbeschichtung ein Polymer mit anorganischen Füllstoffen.

Bevorzugt ist die Plastikkarte eine Monokarte, insbesondere aus Polyester. Diese Karten sind besonders kostengünstig herstellbar und lassen sich wegen ihrer geringen Kartendicke und damit einhergehenden Flexibilität auch in handelsübliche Tintenstrahl- und/oder Laserdrucker ohne den oben erwähnten Spezialeinzug einziehen (ggf. ohne daß sie auf das oben erwähnte Trägermaterial aufgespendet sind).

Alternativ kann die Plastikkarte eine laminierte Plastikkarte sein, welche aus wenigstens zwei Beschichtungen besteht, wobei die Außenseite der einen oder beider außenliegenden Schichten mit der Kunststoffbeschichtung beschichtet ist. Die Herstellung solcher Plastikkarten erfolgt damit einfach derart, daß auf einer Folie (aus einem PET-, PVC-, ABS-, Polycarbonat-Material, etc.) vorab die Kunststoffbeschichtung aufgetragen wird. Diese Folie wird anschließend als außenliegende Schicht(en) (wobei die Kunststoffbeschichtung nach außen zeigt) mit den anderen Folien (vorzugsweise insgesamt vier Folien) laminiert, so daß sich insgesamt eine hoch qualitative Plastikkarte ergibt, bei der aufgrund des Laminierungsprozesses die Gefahr des Ablösens einer Schicht (bzw. Folie), beispielsweise der Außenfolie mit der Beschichtung, stark vermindert ist (gegenüber beispielsweise nachträglichen Klebeprozessen, bei denen eine Papierschicht nachträglich auf den Plastikkörper aufgeklebt wird; bei auflaminierten Papier stellt die geringe Spaltfestigkeit des Papiers das Problem dar).

Nach Anspruch 16 ist eine Produktkombination geschaffen, die wenigstens ein erfindungsgemäßes Trägermaterial mit aufgespendeter Plastikkarte oder eine Plastikkarte mit der Kunststoffbeschichtung sowie ein Computerprogrammprodukt zum Erstellen einer kundenindividualisierten Druckvorlage für die zu bedruckende Plastikkarte durch den Kunden und zum Steuern eines handelsüblichen Druckers für das Bedrucken der Plastikkarte mit der erstellten Druckvorlage umfaßt. Vorteilhaft erhält der Kunde mit dieser Produktkombination alles, was er zum Herstellen bzw. Vollenden seiner nach eigenen Vorstellungen kreierten Plastikkarte benötigt. Das computerprogrammprodukt kann dabei so ausgestaltet sein, daß es an das spezielle Trägermaterial (z.B. hinsichtlich der Anzahl und Anordnung der aufgespendeten Plastikkarten) der Produktkombination angepaßt ist.

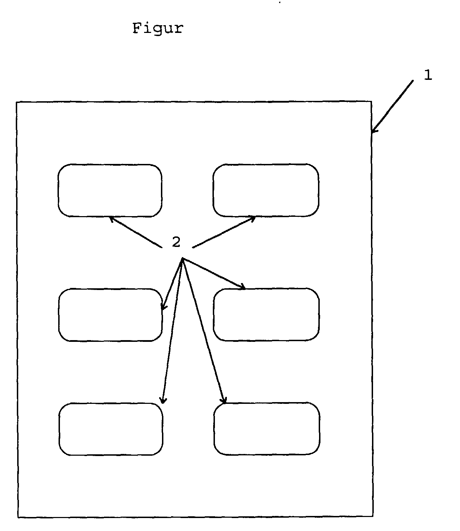

Die Erfindung sowie weitere Vorteile und Ausgestaltungen der Erfindung werden nunmehr anhand bevorzugter Ausführungsbeispiele mit Bezug auf die beigefügte einzige Figur näher erläutert.

Die Figur zeigt in schematischer Aufsicht ein Trägermaterial 1 mit aufgespendeten Plastikkarten 2.

Nachfolgend wird das erfindungsgemäße Verfahren zum Herstellen solcher kundenindividualisierten Plastikkarten 2 näher erläutert. Ausgangsstoff bei der Plastikkartenherstellung ist im Falle von Monokarten eine Folie aus Kunststoff mit einer bestimmten Oberflächenbeschaffenheit, Dicke, gegebenenfalls bestimmter Füllstoffe usw. Diese Folie ist in der Verwendung als Dünnplastikkarte etwa 0,25 mm dick.

Es können auch Hartplastikkarten aus mehreren Schichten hergestellt und durch Lamination unter definierten Druck-, Erwärmungs- und Abkühlprozessen zu einem untrennbaren Kartenkörper verschmolzen werden. Auch hierbei kann das Ausgangsprodukt eine bereits laminierte Folie sein, aus der die einzelnen Plastikkarten 2 ausgestanzt werden. Hartplastikkarten weisen gewöhnlich eine größere Dicke auf, im Bereich von 0,75 mm. Daher lassen sie sich unter Umständen nur von Plottern oder von Drucker mit einem Spezialeinzug bedrucken, der die Karten beim Einziehen nicht verbiegt. Solche Drucker als Tintenstrahl- oder Laserdrucker sind kürzlich auf dem Markt erschienen, bei denen die Karte nicht über eine Walze geführt (gebogen) wird, sondern in einem dafür vorgesehenen Schlitten auf einer geradlinigen, also nicht gekrümmten Einzugsbewegung an dem Druckkopf vorbeigeführt wird.

Der Aufbau und die Abmessungen solcher Plastikkarten richten sich überwiegend nach der ISO-Norm (z.B. ISO 7810 und 7813). Anstelle einer Folie als Ausgangsmaterial kann auch gespritztes Plastikmaterial verwendet werden. Das Material für solche Plastikkarten 2 kann beispielsweise PVC (Polyvinylchlorid), ABS (Acrylnitril Butadien Styrol-Copolymer), PC (Polycarbonat), PE (Polyethylen) oder Polyester sein.

In die Plastikkarte kann ferner beispielsweise ein Halbleiter implantiert werden, um zum Beispiel eine Speicherkarte, eine Speicherkarte mit Schutzfunktion oder eine Prozessorkarte mit integrierter Rechenfunktion etc. zu erhalten. Ferner können Duftfelder, Hologramme, 3D-Objekte oder Magnetlesestreifen in die Karte eingebracht werden. Im Falle von sogenannten Chip-Plastikkarten kann somit ein Datenverkehr wie beispielsweise zwischen autorisierten Schreib-/Lesegeräten erfolgen.

Chipkarten mit integrierten Hochfrequenzübertragungseinrichtungen (systemangepaßte Antennen im inneren Karte zum kontaktfreien Datenverkehr) werden gewöhnlich in Laminiertechnik hergestellt. Dabei werden diese Plastikkarten 2 mit Laminataufbau durch äußere Abdeckfolien gegen Abrieb und Manipulation geschützt.

Im Falle von Monokarten aus Polyester oder Hartplastikkarten mit einer Abdeckfolie, die von handelsüblichen Druckern nicht mit zufriedenstellender Druckqualität bedruckt werden können, kann auf der später zu bedruckenden Oberfläche der Plastikkarte 2 ein Schreibfeldlack aufgebracht werden (zum Beispiel ein transparenter oder weißer UV-Lack im Siebdruck- oder Offsetverfahren oder auch ein farbiger Lack abhängig vom Einsatzzweck der Plastikkarte 2) . Falls eine Monokarte aus PVC verwendet wird, kann zum Beispiel auf der später nicht zu bedruckenden Kartenrückseite der Monokarte ein UV-Lack aufgebracht werden, der die spätere Ablösbarkeit der Plastikkarte 2 vom Trägermaterial erleichtert.

Für besonders abriebfeste Oberflächen (mit Radierschutz) kann die UV-Farbe bei der Herstellung auch mittels eines Siebdrucks in mehreren Ebenen verwirklicht werden.

Zum Erhöhen der Tinten- und/oder Tonerhaftfestigkeit kann eine oder beide Seiten der Plastikkarte (Monokarte, Laminatkarte, etc.) mit einer Kunststoffbeschichtung aus einem Polymer mit anorganischen Füllstoffen beschichtet sein. Diese speziellen Beschichtungen eignen sich besonders, da ihre Hafteigenschaft insbesondere auf Plastikkarten sehr gute Ergebnisse gezeigt hat. So lassen sich diese Beschichtungen nicht mehr in Form einer Folie von dem Plastikkartenkörper ablösen, wie dies beispielsweise bei der aufgeklebten oder auflaminierten Papierschicht der Fall ist. Die Herstellung von Monokarten erfolgt dabei derart, daß die Folie auf einer oder beiden Seiten mit der Kunststoffbeschichtung beschichtet wird und anschließend die Karten aus der Folie ausgestanzt werden. Im Falle von laminierten Karten, wird eine Folie, welche später die eine oder beide Außenseiten der Plastikkarte bilden soll einseitig mit der Kunstoffbeschichtung beschichtet, auf die übrigen Folien gelegt (vorzugsweise werden zwei innenliegende unbeschichtete und unbedruckte sowie zwei außenliegende beschichtete und unbedruckte Folien aufeinandergelegt) und anschließend bei erhöhtem Druck und erhöhter Temperatur miteinander "verschmolzen" (laminiert) und anschließend in Kartenform gestanzt.

Das Aufbringen der speziellen UV-Farben als Siebdruck-Schreibfeld erfolgt zweckmäßigerweise ebenfalls vor dem Ausstanzen der Plastikkarten 2 aus den Folienbögen. Ferner können nach oder gleichzeitig beim Herausstanzen der Plastikkarten 2 noch deren Ecken abgerundet sowie die Kanten gebrochen werden, falls erforderlich. Die einzelnen unbedruckten Plastikkarten 2 werden anschließend auf einem druckereinzugsfähigen Trägermaterial aufgespendet.

Als Trägermaterial können alle Materialien verwendet werden, die von einem Drucker eingezogen werden können (zum Beispiel Papier-, Folien-, Kunststoff-, Pappe oder sonstige Materialien). Die Plastikkarten 2 werden anschließend über ein geeignetes Verfahren auf dem Trägermaterial so lösbar befestigt, daß sie sich während des Druckvorgangs in einem handelsüblichen Drucker (zum Beispiel Laserdrucker, Tintenstrahldrucker, Matrixdrucker, Nadeldrucker, etc.) nicht ablösen.

Für von einem Tintenstrahldrucker zu bedruckende Plastikkarten kann ggf. auch das Kartenmaterial der Plastikkarte 2 selbst hinsichtlich dem Verlaufen der Tinte beim Aufspritzen und der Haftbarkeit der Tinte nach dem Trocknen optimiert werden. Dabei können die speziellen chemischen und physikalischen Eigenschaften der Tinte und des Kartenmaterials einander gegenübergestellt werden. Als besonders geeignet hat sich hierfür eine Plastikkarte aus einem gestrichenen PVC-Material (d.h., mit einer papierähnhichen Oberfläche auf PVC) erwiesen. Für alle Kombinationen von Plastikkartenmaterial und Tinte, Toner oder Druckfarbe kann jedoch das Aufbringen einer zusätzlichen geeigneten Kunststoffbeschichtung (siehe oben) auf dem Plastikkartenmaterial zwecks besserer Bedruckbarkeit und besserer Haltbarkeit der Tinte, des Toners oder der Druckfarbe auf der Plastikkarte vorteilhaft sein.

Eine Vorrichtung zum Aufspenden der Plastikkarten hat beispielsweise folgenden Aufbau: Von einem Kartenmagazin werden die einzelnen Plastikkarten über einen geeigneten Schacht oder ein geeignetes Laufband einer ersten Walze zugeführt und an deren Oberfläche angesaugt. Hierzu weist die erste Walze beispielsweise über ihre Zylinderoberfläche verteilt viele kleine Lüftungslöcher zur Vakuumbildung auf. Hierzu wird das mit den Lüftungslöchern verbundene Innere der ersten Walze evakuiert. Die erste Walze rollt über einer Zuführeinrichtung ab, auf der das Trägermaterial an der ersten Walze vorbeigeführt wird.

Vor dem Vorbeiführen des Trägermaterials an der ersten Walze wird beispielsweise an den Stellen des Trägermaterials ein Kleber aufgetragen, an denen die jeweilige Plastikkarte 2 lösbar befestigt werden soll. Hierzu wird das Trägermaterial an einer zweiten Walze mit Klischees an der Walzenoberfläche vorbeigeführt. An dieser Walze befindet sich weiterhin eine Wanne mit Kleber, in die die Klischees beim Rotieren der zweiten Walze eintauchen. Das Klischee bringt anschließend eine genau definierte Klebemenge an die richtige Stelle auf das Trägermaterial. Das Klebematerial kann so beschaffen sein, daß die Plastikkarte sich ohne Kleberrückstände auf der Plastikkarte von dem Trägermaterial löst. Zusätzlich kann zum Unterstützen des Aufspendevorgangs eine dritte unterhalb der ersten Walze angeordnete Walze mit Klischees zum Andrücken der Plastikkarten 2 an das Trägermaterial vorgesehen sein. Das Trägermaterial wird dabei zwischen den beiden Walzen durchgeführt und von seiner einen Seite mit der Plastikkarte bestückt, während von der anderen Seite das Klischee das Trägermaterial an die Plastikkarte drückt.

Das Trägermaterial kann dabei für das Aufspenden der Plastikkarten 2 zum Beispiel als Endlospapier vorliegen. Zum leichteren Vertrieb des Trägermaterials wird dieses zweckmäßigerweise nach dem Aufspenden der Plastikkarte 2 in Stapelpapier mit einem bestimmten Blattformat vereinzelt. Pro Blatt kann dabei eine bestimmte Anzahl an aufgespendeten Plastikkarten 2 vorgesehen sein (zum Beispiel eine, vier oder sechs aufgespendete Plastikkarten 2 pro DIN A4-Blatt).

Die so auf das Trägermaterial aufgespendeten, unbedruckten Plastikkarten 2 oder auch die Plastikkarte mit der speziellen Kunststoffbeschichtung allein (ohne Trägermaterial) können nunmehr zusammen mit einem entsprechenden Computerprogrammprodukt an den Endkunden vertrieben werden. Das Computerprogrammprodukt ist dabei in seiner einfachsten Form ein speziell auf das Format der Plastikkarte 2 konfiguriertes Text- und/oder Graphikverarbeitungsprogramm, mit dem der Endkunde seine gewünschte Information als Druckvorlage erstellen kann und anschließend per Druckbefehl auf die Plastikkarten 2 aufdrucken kann.

Hierzu ist zum Beispiel nicht mehr als ein gewöhnlicher Personalcomputer mit angeschlossenem (Tintenstrahl- und oder Laser) -Drucker erforderlich, in den das Trägermaterial mit den aufgespendeten Plastikkarten 2 zum Beispiel in Form von DIN A4-Blättern bzw. die Plastikkarte allein (bei entsprechendem Einzug des Druckers oder bei Monokarten, welche auch um die Druckwalzen herkömmlicher Tintenstrahl- und/oder Laserdrucker gebogen werden können) eingelegt wird. Das Computerprogrammprodukt kann den Endkunden beim Erstellen der Druckvorlage so führen, daß bestimmte gestalterische Mindestregeln eingehalten werden. Es kann dabei den Kunden verschiedene Sätze an Gestaltungskombinationen vorgeben, in denen beispielsweise die Schriftgröße, die Schriftart, die Winkelung, die Farbe, die Ausführung von Numerierungen, etc. pro Gestaltungssatz hinsichtlich gestaltender Gesichtspunkte vorgegeben sind. Der Kunde sieht dabei auf dem Bildschirm seines Personalcomputers, wie die bedruckte Plastikkarte 2 nach dem Druck aussieht. Er muß sich dabei nicht um die speziellen Daten für die Anordnung der Plastikkarten 2 auf dem Trägermaterial kümmern, da diese dem Computerprogrammprodukt bekannt sind (zum Beispiel kann es lediglich erforderlich sein, daß der Benutzer den jeweiligen Trägermaterialtyp (Blattgröße etc.) mit der entsprechenden Anzahl an Plastikkarten angibt).

Bei der Herstellung von Visitenkarten kann das Computerprogrammprodukt beispielsweise alle auf dem Trägermaterial aufgespendeten Plastikkarten 2 mit der einen auf dem Computerbildschirm entworfenen Druckvorlage für das Visitenkartenbild bedrucken. Bei Einzelanfertigungen kann dem Rechner jedoch auch mitgeteilt werden, welche Plastikkarte 2 (im Falle mehrerer Plastikkarten 2 ggf. pro Trägermaterial) mit welcher Druckvorlage bedruckt werden sollen.

Das Computerprogrammprodukt kann z.B. in Form einer Diskette oder CD mit der darauf gespeicherten Software vorliegen, oder auch als Festwertspeicher (EEPROM, PROM, ROM, etc.). Im letzteren Fall können zum Beispiel Rechner mit einer sehr einfachen Rechnerarchitektur mit dem entsprechenden Festwertspeicher bestückt werden und zum Beispiel in Verkaufsräumen mit dem zugehörigen Drucker aufgestellt werden. Der Kunde kann damit das Programm unmittelbar auf diesem softwarespezifischen Rechner bedienen und seine Plastikkarten 2 direkt im Geschäft drucken. Damit können beispielsweise bestimmte Laden das Drucken von hochwertigen Visitenkarten anbieten, indem sie den speziell ausgerüsteten Rechner mit Drucker dem Kunden zur Verfügung stellen, der im Laden lediglich das Trägermaterial mit den aufgespendeten Plastikkarten 2 bzw. die Plastikkarte allein kauft.

Falls die Plastikkarte zusätzlich einen Speicherchip enthält, kann das Computerprogrammprodukt so ausgestaltet sein, daß es beispielsweise das Beschreiben des Speicherchips mit der auf die Kartenoberfläche gedruckten Information mittels eines Kartenschreiblesegeräts erlaubt. So kann z.B. beim Erstellen von Visitenkarten die auf die Visitenkarte zu druckende Information ebenfalls in dem Speicherchip gespeichert werden, von wo sie zum leichteren Adressenaustausch oder zur Identifikation über ein geeignetes Lesegerät später wieder ausgelesen werden kann.

## Patentansprüche

1. Verfahren zum Herstellen wenigstens einer kundenindividualisierten Plastikkarte (2), bei welchem:
a) wenigstens eine unbedruckte Plastikkarte (2) hergestellt wird;
b) die wenigstens eine hergestellte und unbedruckte Plastikkarte (2) auf einem druckereinzugsfähigen Trägermaterial (1) lösbar aufgespendet wird;
c) eine kundenindividualisierte Druckvorlage für die wenigstens eine unbedruckte Plastikkarte (2) erstellt wird;
d) die wenigstens eine unbedruckte Plastikkarte (2) von einem handelsüblichen Drucker mit der erstellten Druckvorlage bedruckt wird; und
e) die wenigstens eine bedruckte Plastikkarte (2) von dem Trägermaterial (1) gelöst wird.

2. Verfahren nach Anspruch 1, bei welchem nach Schritt b) das Trägermaterial (1) mit aufgespendeten Plastikkarten (2) auf eine bestimmte Blattgröße mit einer bestimmten Anzahl an Plastikkarten pro Blatt vereinzelt wird.

3. Verfahren nach Anspruch 1 oder 2, bei welchem zum Herstellen der Plastikkarte (2) im Schritt a) eine Plastikfolie in Kartenform geschnitten oder gestanzt wird.

4. Verfahren nach Anspruch 3, bei welchem die Kanten der in Kartenform geschnittenen bzw. gestanzten Plastikkarten (2) abgerundet werden.

5. Verfahren nach einem der vorhergehenden Ansprüche, bei welchem im Schritt a) wenigstens eine Plastikkarte als Monokarte aus Polyester hergestellt wird und vor dem Schritt c) ein Schreibfeldlack zum Herstellen einer druckfesten Druckunterlage auf die im Schritt d) zu bedruckende Oberfläche der wenigstens einen Plastikkarte (2) aufgebracht wird.

6. Druckereinzugsfähiges Trägermaterial (1) mit wenigstens einer darauf lösbar aufgespendeten, unbedruckten, von einem handelsüblichen Drucker bedruckbaren Plastikkarte (2).

7. Trägermaterial (1) nach Anspruch 6, bei dem die wenigstens eine Plastikkarte (2) eine Monokarte aus Polyester ist.

8. Trägermaterial (1) nach Anspruch 7, bei dem auf die zu bedruckende Oberfläche der wenigstens einen Plastikkarte (2) ein Schreibfeldlack zum Herstellen einer druckfesten Druckunterlage aufgebracht ist.

9. Trägermaterial (1) nach einem der Ansprüche 6 bis 8, bei welchem das Trägermaterial (1) Einzelblattform hat, auf dem pro Einzelblatt wenigstens eine Plastikkarte (2) aufgespendet ist.

10. Plastikkarte, bei welcher eine oder beide Kartenseiten mit einer durch einen Tintenstrahl- und/oder einen Laserdrucker bedruckbaren Kunststoffbeschichtung beschichtet ist.

11. Plastikkarte nach Anspruch 10, bei welcher die Kunststoffbeschichtung die wenigstens eine Kartenseite vollständig bedeckt.

12. Plastikkarte nach Anspruch 10 oder 11, bei welcher die eine oder beide Kartenaußenseiten mit der Beschichtung unbedruckt sind.

13. Plastikkarte nach einem der Ansprüche 10 bis 12, bei welcher die Kunststoffbeschichtung ein Polymer mit anorganischen Füllstoffen enthält.

14. Plastikkarte nach einem der Ansprüche 10 bis 13, welche als eine Monokarte, insbesondere aus Polyester ausgebildet ist.

15. Plastikkarte nach einem der Ansprüche 10 bis 13, welche als eine laminierte Plastikkarte ausgebildet ist, wobei das Laminat aus wenigstens zwei Schichten besteht, wobei die Außenseite der einen oder beider außenliegenden Schichten mit der Kunststoffbeschichtung beschichtet ist.

16. Produktkombination, die wenigstens ein Trägermaterial (1) mit aufgespendeter Plastikkarte (2) nach einem der Ansprüche 6 bis 9 oder wenigstens eine Plastikkarte nach einem der Ansprüche 10 bis 15 sowie ein Computerprogrammprodukt zum Erstellen einer kundenindividualisierten Druckvorlage für die zu bedruckende Plastikkarte (2) durch den Kunden und zum Steuern eines handelsüblichen Druckers für das Bedrucken der Plastikkarte (2) mit der erstellten Druckvorlage umfaßt.
